(19) Europäisches Patentamt
European Patent Office
Office européen des brevets

(11) **EP 3 879 675 B1**

(12) **FASCICULE DE BREVET EUROPEEN**

(45) Date de publication et mention
de la délivrance du brevet:
**08.03.2023 Bulletin 2023/10**

(51) Classification Internationale des Brevets (IPC):
**H02K 1/32** *(2006.01)*        **H02K 11/20** *(2016.01)*
**H02K 1/22** *(2006.01)*

(21) Numéro de dépôt: **21162196.6**

(52) Classification Coopérative des Brevets (CPC):
**H02K 11/20; H02K 1/32;** H02K 11/22

(22) Date de dépôt: **12.03.2021**

(54) **MOTEUR DE TRACTION, CHAÎNE DE TRACTION ET VÉHICULE ASSOCIÉS**
ZUGMOTOR, ENTSPRECHENDE ZUGKETTE UND ENTSPRECHENDES FAHRZEUG
TRACTION ENGINE, ASSOCIATED TRACTION CHAIN AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2020 FR 2002446**

(43) Date de publication de la demande:
**15.09.2021 Bulletin 2021/37**

(73) Titulaire: **ALSTOM Transport Technologies**
**93400 Saint-Ouen-sur-Seine (FR)**

(72) Inventeurs:
• **GUIGNIER, Gilles**
**90000 Belfort (FR)**
• **RACLOT, Jean-Philippe**
**25000 Besançon (FR)**

(74) Mandataire: **Lavoix**
**2, place d'Estienne d'Orves**
**75441 Paris Cedex 09 (FR)**

(56) Documents cités:
**JP-A- H04 193 047    JP-A- H06 105 492**

**Description**

La présente invention concerne un moteur de traction pour un véhicule. L'invention concerne également une chaîne de traction comprenant un tel moteur. L'invention concerne également un véhicule comprenant une telle chaîne de traction.

L'invention s'applique notamment au domaine des transports, par exemple aux véhicules dans lesquels des moteurs de traction à ventilation ouverte, tels que des moteurs électriques, sont utilisés.

De tels moteurs sont habituellement refroidis par de l'air prélevé à l'extérieur du moteur et soufflé ou aspiré à travers des canaux de refroidissement d'un rotor du moteur.

Toutefois, l'air refroidissant le moteur est susceptible d'être pollué par des poussières dues au freinage ou provenant de l'environnement extérieur. Ces poussières peuvent s'accumuler dans les canaux de refroidissement du rotor et conduire à l'obturation partielle ou totale de tels canaux de refroidissement. La conséquence est un refroidissement du moteur moins efficace et donc une surchauffe du moteur.

Or, une telle surchauffe du moteur peut entraîner la réduction de sa durée de vie, voire même l'arrêt du moteur si sa température interne est trop importante.

Afin d'éviter une telle situation, il est nécessaire d'effectuer une maintenance préventive du moteur pour l'inspection et le nettoyage des canaux. Dans cette optique, la fréquence des opérations de maintenance est estimée a priori en fonction d'un risque d'encrassement des canaux de refroidissement.

Cependant, une telle estimation de la fréquence des opérations de maintenance n'est pas toujours précise, les canaux pouvant être plus ou moins obturés en fonction des conditions d'utilisation du moteur. Il existe, en outre, un besoin d'optimiser cette fréquence de maintenance, afin de minimiser la durée de maintenance du moteur sur sa durée de vie et ainsi d'améliorer le taux de disponibilité du moteur.

De plus, une telle maintenance préventive implique le démontage du moteur afin de pouvoir inspecter les canaux de refroidissement, ce qui constitue un travail fastidieux.

JP H06 105 492 A et JP H04 193 047 A divulguent des moteurs de traction pour véhicule.

Le but de l'invention est de proposer un moteur de traction permettant la détection de l'obturation de ses canaux de refroidissement de façon plus efficace, ainsi qu'une programmation de sa maintenance plus optimisée.

A cet effet, l'invention a pour objet un moteur selon la revendication 1.

Suivant d'autres aspects avantageux, le moteur de traction selon l'invention comporte l'une ou plusieurs des caractéristiques des revendications 2 à 8, prises isolément ou selon toutes les combinaisons techniquement possibles.

L'invention a aussi pour objet une chaîne de traction selon la revendication 9.

L'invention a aussi pour objet un véhicule selon la revendication 10.

D'autres caractéristiques et avantages de l'invention apparaîtront à la lecture de la description qui va suivre, donnée uniquement à titre d'exemple non limitatif, et faite en référence aux dessins annexés sur lesquels :

[Fig 1] la figure 1 est une vue en coupe longitudinale d'un exemple de moteur de traction comprenant notamment un arbre de rotation, un rotor et un dispositif de détection de l'obturation d'au moins un canal de refroidissement du rotor,

[Fig 2] la figure 2 est une vue en coupe transversale du rotor de la figure 1,

[Fig 3] la figure 3 est une vue en coupe transversale d'une partie du rotor de la figure 1 lorsque ses canaux de refroidissement ne sont pas obturés,

[Fig 4] la figure 4 est une représentation graphique de l'évolution temporelle d'un signal électrique généré par un récepteur optique du dispositif de détection de la figure 1 lorsque les canaux de refroidissement ne sont pas obturés (comme illustré sur la figure 3),

[Fig 5] la figure 5 est une vue en coupe transversale d'une partie du rotor de la figure 1 lorsque ses canaux de refroidissement sont obturés partiellement, et

[Fig 6] la figure 6 est une représentation graphique de l'évolution temporelle du signal électrique généré par le récepteur optique du dispositif de détection de la figure 1 lorsque les canaux de refroidissement sont obturés partiellement (comme illustré sur la figure 5).

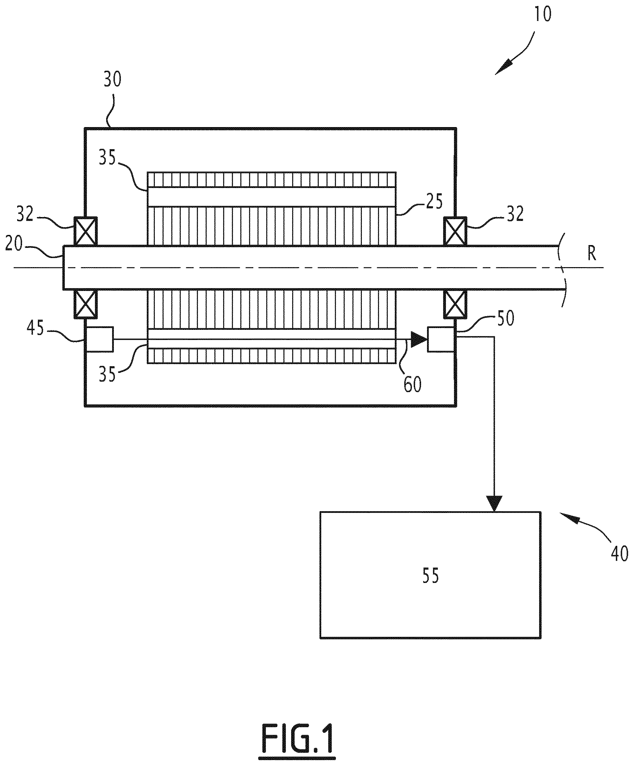

La figure 1 représente un moteur 10 de traction pour véhicule.

Par exemple, le moteur 10 est un moteur d'un véhicule ferroviaire, ou alternativement, de n'importe quel autre type de véhicule.

Le moteur 10 est compris dans la chaîne de traction du véhicule.

Le moteur 10 est, par exemple, un moteur électrique, tel qu'un moteur à courant continu ou à courant alternatif, un moteur à combustion, un moteur à aimants permanents ou encore n'importe quel autre type de moteur de traction.

Selon l'exemple de la figure 1, le moteur 10 comporte un arbre de rotation 20 et un rotor 25 couplé avec l'arbre de rotation 20.

Par exemple, le moteur 10 comprend, en outre, une enceinte 30 dans lequel sont positionnés l'arbre de rotation 20 et le rotor 25.

L'arbre de rotation 20 définit un axe de rotation R autour duquel le rotor 25 et l'arbre de rotation 20 sont aptes à être entraînés en rotation lors du fonctionnement du moteur 10.

Selon l'exemple décrit, le rotor 25 a une forme cylindrique centrée sur l'axe de rotation R et comprend un orifice central dans lequel est inséré l'arbre de rotation 20.

En complément facultatif, le moteur 10 comprend, en outre, des paliers 32 aptes à guider la rotation de l'arbre de rotation 20 autour de l'axe de rotation R. Par exemple, les paliers 32 sont positionnés sur l'enceinte 30.

En complément, le moteur 10 comprend un stator, non représenté, disposé autour du rotor 25.

Le moteur 10 comprend au moins un canal de refroidissement 35 du rotor 25. Avantageusement le rotor 25 comprend l'au moins un canal de refroidissement 35 qui traverse alors le rotor 25.

On entend par canal de refroidissement un canal de circulation d'air disposé autour/ à proximité du rotor 25 et notamment une ouverture dans le rotor 25 comprenant au moins deux extrémités et permettant le passage d'un fluide réfrigérant à l'intérieur, tel que de l'air extérieur au moteur 10, afin de refroidir le rotor 25 par échange thermique.

Selon l'exemple de la figure 1, l'au moins un canal de refroidissement 35 définit une ouverture rectiligne comprenant une extrémité sur chaque base du cylindre formé par le rotor 25, et dont la coupe transversale est, de préférence, circulaire.

De préférence, l'au moins un canal de refroidissement 35 est parallèle à l'axe de rotation R.

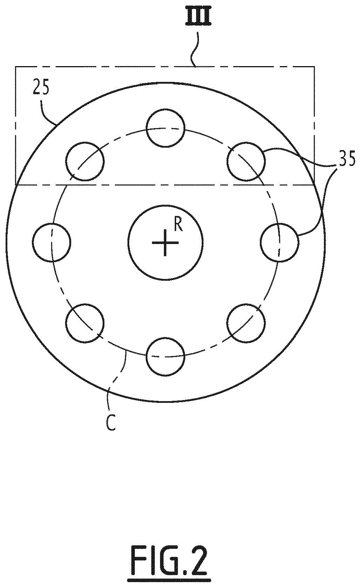

Avantageusement, le rotor 25 comprend une pluralité de canaux de refroidissement 35 traversant le rotor 25 et répartis à équidistance de l'axe de rotation R. Chaque canal de refroidissement 35 croise alors un cercle C centré sur l'axe de rotation R, comme représenté sur la figure 2 montrant une vue en coupe transversale du rotor 25.

Le nombre de canaux de refroidissement est typiquement choisi en fonction des caractéristiques du moteur utilisé.

Selon l'exemple décrit, le rotor 25 comprend huit canaux de refroidissement 35 parallèles à l'axe de rotation R.

Selon l'exemple illustré en figure 2, les canaux de refroidissement 35 sont répartis à intervalles réguliers autour de l'axe de rotation R. Plus précisément, les canaux de refroidissement 35 croisent le cercle C en des points angulairement équirépartis sur le cercle C.

Par exemple, les canaux de refroidissement 35 ont chacun la même largeur. Dans le cas de l'exemple décrit, la largeur d'un canal de refroidissement correspond au diamètre de sa coupe transversale.

Le moteur 10 comporte, en outre, un dispositif de détection 40, au cours du fonctionnement du moteur 10, de l'obturation de l'au moins un canal de refroidissement 35.

Le dispositif de détection 40 comprend un émetteur optique 45 couplé à un récepteur optique 50, et un module de traitement 55.

En variante non représentée, le module de traitement 55 est externe au moteur 10.

L'émetteur optique 45 et le récepteur optique 50 sont fixes par rapport à l'enceinte 30 et positionnés en vis-à-vis, respectivement, d'une première et d'une deuxième extrémité de l'au moins un canal de refroidissement 35 lorsque le rotor 25 est dans une position prédéterminée.

Par exemple, l'émetteur optique 45 et le récepteur optique 50 sont positionnés sur ou dans l'enceinte 30.

L'émetteur optique 45 est par exemple un émetteur laser.

L'émetteur optique 45 est propre à émettre un faisceau optique 60 dans l'alignement de l'au moins un canal de refroidissement 35 lorsque le rotor 25 est dans la position prédéterminée, le faisceau optique 60 émis étant maintenu en continu dans la même direction au cours du fonctionnement du moteur 10.

En variante non représentée, l'émetteur optique 45 est propre à émettre le faisceau optique 60 sur un miroir ou un système de miroirs, l'image du faisceau optique 60 par le miroir ou le système de miroirs étant dans l'alignement de l'au moins un canal de refroidissement 35 lorsque le rotor 25 est dans la position prédéterminée.

En variante, le faisceau optique 60 est émis à intervalles réguliers pour une certaine durée, par exemple une fois par jour pendant une minute, ou encore sur demande, afin d'effectuer un diagnostic ponctuel.

En variante encore, le faisceau optique 60 est émis lorsque le rotor 25 est en rotation et que le moteur 10 n'est pas alimenté, par exemple lors d'une opération d'inspection du moteur 10.

Selon l'exemple décrit, l'émetteur optique 45 est propre à émettre successivement le faisceau optique 60 dans l'alignement de chacun des canaux de refroidissement 35 au cours du fonctionnement du moteur 10, le faisceau optique 60 étant maintenu dans la même direction au cours du fonctionnement du moteur 10.

Plus précisément, le rotor 25 comprend, pour chaque canal de refroidissement 35, une position correspondante, dite position prédéterminée, dans laquelle l'émetteur optique 45 et le récepteur optique 50 sont en vis-à-vis, respectivement, d'une première et d'une deuxième extrémité du canal de refroidissement 35 correspondant. Lorsque le rotor 25 est en rotation autour de l'axe de rotation R, le rotor 25 prend successivement les différentes positions prédéterminées correspondant à chaque canal de refroidissement 35, et l'émetteur optique 45 émet successivement, pour chaque position correspondante, le faisceau optique 60 dans l'alignement du canal de refroidissement 35 correspondant.

Le récepteur optique 50 est configuré pour recevoir le faisceau optique 60 et générer un signal électrique représentatif de l'intensité lumineuse du faisceau optique 60 reçu.

En variante non représentée, le récepteur optique est apte à recevoir l'image du faisceau optique 60 par un miroir ou un système de miroirs.

Selon l'exemple décrit, le signal électrique généré est porté par un courant électrique, dont l'intensité est égale à une intensité de référence lorsque le faisceau optique 60 est reçu totalement par le récepteur optique 50, et nulle lorsque l'intensité lumineuse est nulle.

Alternativement, le signal électrique généré est porté par une tension électrique.

Le signal électrique généré comprend une période égale à la période T de rotation du rotor 25.

Le module de traitement 55 est configuré pour déterminer, en fonction du signal électrique généré par le récepteur optique 50, l'obturation de l'au moins un canal de refroidissement 35, l'au moins un canal de refroidissement 35 étant considéré obturé lorsque le signal électrique issu du récepteur optique 50 est représentatif d'une intensité lumineuse nulle lorsque le rotor 25 est dans la position prédéterminée.

Selon l'exemple décrit, le module de traitement 55 est configuré pour déterminer l'obturation de chacun des canaux de refroidissement 35 en fonction du signal électrique généré par le récepteur optique 50.

Par exemple, le module de traitement 55 est configuré pour recevoir le signal électrique issu du récepteur optique 50 à une fréquence f définie par la formule suivante, la fréquence f correspondant à une fréquence d'échantillonnage pour le signal électrique :

$$[\text{Math 1}] \quad f = \frac{N*m*b}{d},$$

où :

- N est la fréquence de rotation du rotor 25 en tours/seconde,
- b est la circonférence d'un cercle centré sur l'axe de rotation et croisant l'au moins un canal de refroidissement en millimètres,
- d est la largeur de l'au moins un canal de refroidissement 35 en millimètres, et
- m un nombre de points de mesure du récepteur optique 50 pour l'au moins un canal de refroidissement 35.

Le nombre de points m correspond au nombre d'échantillons pour lesquels le récepteur optique 50 reçoit le faisceau optique 60 à travers l'au moins un canal de refroidissement au cours d'une période T, lorsque ledit canal de refroidissement 35 n'est pas obturé. La période T, est une période continue de réception du faisceau optique 60 alors que le rotor 25 est en rotation. En d'autres termes, le nombre de points m correspond au nombre d'échantillons pour lesquels le récepteur optique 50 reçoit le faisceau optique 60 à travers un même canal de refroidissement 35 au cours d'une période T de rotation du rotor 25.

De préférence, le nombre de points de mesure m est supérieur à 4, avantageusement supérieur à 10.

En complément, le module de traitement 55 est configuré pour calculer, en fonction du signal électrique généré par le récepteur optique 50, un pourcentage d'obturation de l'au moins un canal de refroidissement 35.

Le module de traitement 55 est configuré pour déterminer, à partir du signal électrique, la durée $t_2$ de réception du faisceau optique 60 à travers l'au moins un canal de refroidissement 35 sur une période de rotation du rotor 25.

En outre, le module de traitement 55 est configuré pour déterminer, à partir du signal électrique, la période T de rotation du rotor 25. Alternativement, la période T de rotation est communiquée au module de traitement 55 par un système de contrôle du moteur 10.

Le module de traitement 55 est configuré pour calculer le pourcentage d'obturation de l'au moins un canal de refroidissement 35 en fonction de la période T de rotation du rotor 25, et de la durée $t_2$.

Plus précisément, le pourcentage d'obturation de l'au moins un canal de refroidissement 35 est calculé en fonction de la période T de rotation du rotor 25, de la durée $t_2$ de réception du faisceau optique 60 sur une période de rotation du rotor 25, et avantageusement de la longueur de l'arc de cercle porté par le cercle C et délimité par le contour du canal de refroidissement 35 et de la distance dudit canal de refroidissement 35 à l'axe de rotation R, la distance du canal de refroidissement 35 à l'axe de rotation R correspondant au rayon du cercle C.

Selon l'exemple décrit où la largeur et la distance de chaque canal de refroidissement 35 est la même, le pourcentage d'obturation de l'au moins un canal de refroidissement 35 est fonction du rapport de la durée $t_2$ sur la durée $t_1$, la durée $t_1$ correspondant à la période de rotation T divisée par le nombre de canaux de refroidissement 35.

Par exemple, l'au moins un canal de refroidissement est considéré non obturé lorsque le pourcentage d'obturation est inférieur à 10%, partiellement obturé lorsque le pourcentage d'obturation est compris entre 10% et 90% et totalement obturé lorsque le pourcentage d'obturation est supérieur à 90%.

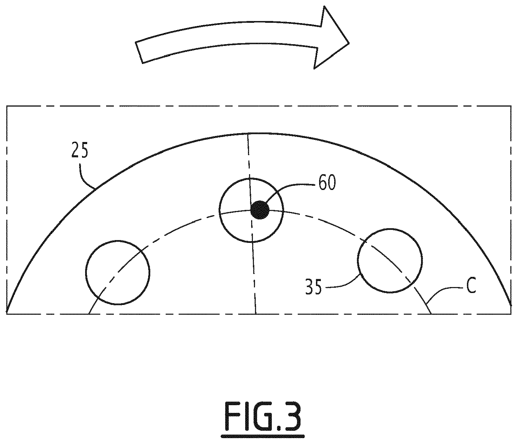

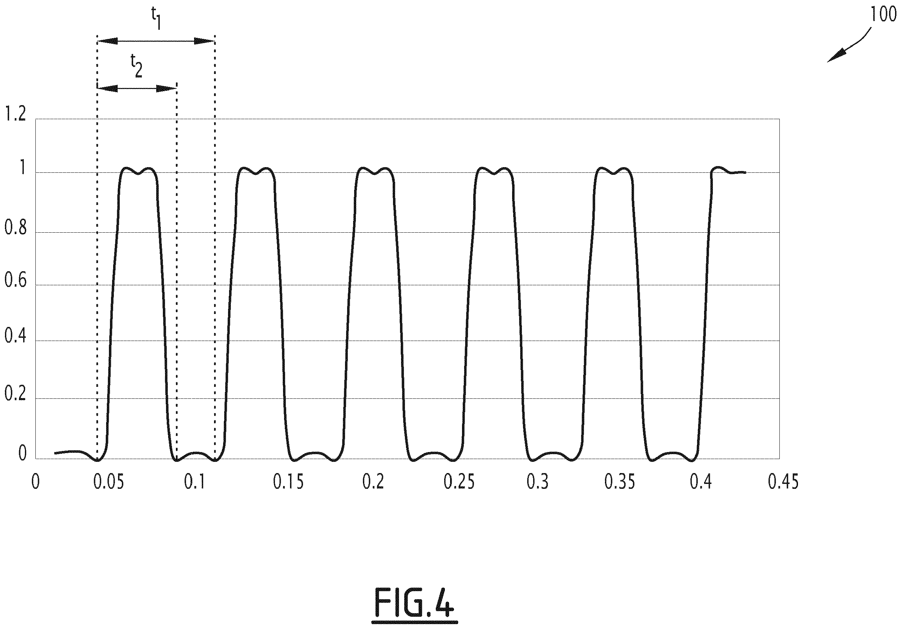

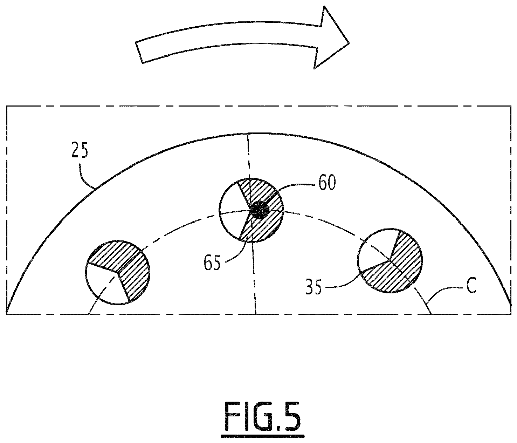

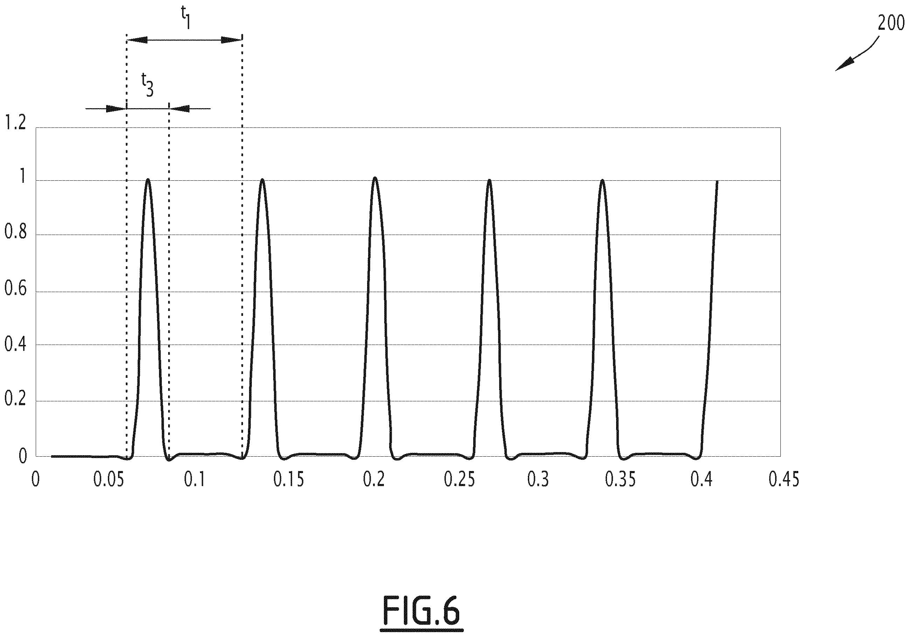

Le fonctionnement du dispositif de détection 40 au cours du fonctionnement du moteur 10 va maintenant être décrit dans le cas où les canaux de refroidissement 35 ne sont pas obturés, illustré par les figures 3 et 4, en comparaison au cas où les canaux de refroidissement 35 sont partiellement obturés, illustré par les figures 5 et 6.

La figure 3 représente le rotor 25 dans le cas où les canaux de refroidissement 35 ne sont pas obturés.

Dans ce cas, rien n'empêche l'émission du faisceau lumineux 60 à travers les canaux de refroidissement lorsqu'ils sont alignés.

Le signal électrique généré par le récepteur optique 50 est représenté sur le graphique 100 de la figure 4 montrant l'évolution temporelle de l'intensité du signal électrique normée sur l'intensité de référence.

Les instants où l'intensité est égale à l'intensité de référence correspondent aux instants au cours desquels le faisceau optique 60 est aligné avec un canal de refroidissement 35, et les instants où l'intensité est nulle correspond à des instants intermédiaires où le faisceau optique est bloqué par le rotor 25.

Le module de traitement 55 détermine alors la durée $t_2$, pour chaque canal de refroidissement 35, et la durée $t_1$ et calcule le pourcentage d'obturation de chaque canal de refroidissement en fonction des durées déterminées, le pourcentage d'obturation étant égal dans ce cas à 0%.

La figure 5 représente le rotor 25 dans le cas où les canaux de refroidissement 35 sont partiellement obturés, par exemple par de la poussière accumulée 65.

Dans l'exemple de la figure 5, les canaux de refroidissement 35 sont tous également au moins partiellement obturés. Néanmoins, dans d'autres cas particuliers, l'obturation des canaux de refroidissement 35 est différente d'un canal à l'autre.

Dans le cas de la figure 5, l'émission du faisceau optique 60 est bloquée lorsque le faisceau optique 60 et les parties obturées des canaux de refroidissement 35 sont alignés, la réception du faisceau optique 60 pour un même canal de refroidissement 35 étant alors plus courte lorsqu'il est obturé.

Comme illustré sur le graphique 200 de la figure 6, la durée $t_3$ de réception du faisceau optique 60 à travers un canal de refroidissement 35 sur une période de rotation du rotor 25 est plus faible que la durée $t_2$ (obtenue dans le cas non obturé de la figure 4).

Le pourcentage d'obturation calculé est alors plus élevé dans le cas de canaux de refroidissement 35 obturés.

Ainsi, plus le rapport de la durée $t_3$ sur la durée $t_1$ est faible, plus le pourcentage d'obturation calculé par le module de traitement 55 est élevé.

Le moteur 10 permet, via son dispositif de détection 40, de détecter l'obturation de ses canaux de refroidissement 35 au cours de son fonctionnement, et sans avoir à démonter le moteur 10.

Ainsi, la maintenance du moteur 10 peut être programmée de façon plus optimisée, le suivi de l'obturation des canaux de refroidissement 35 étant fait à tout moment, ou alternativement, à intervalles réguliers ou sur demande.

En outre, le calcul du pourcentage d'obturation des canaux de refroidissement 35 permet une programmation de la maintenance encore plus optimisée et plus adaptée aux conditions d'utilisation du moteur, l'opérateur de maintenance pouvant choisir d'effectuer la maintenance, par exemple, lorsque le pourcentage d'obturation d'un ou de plusieurs canaux de refroidissement 35 est supérieur à un pourcentage prédéfini en fonction des conditions d'utilisation du moteur 10.

De plus, le calcul du pourcentage d'obturation des canaux de refroidissement 35 permet aussi d'aider au diagnostic du moteur 10 en cas de surchauffe anormale.

L'homme du métier comprendra que l'invention ne se limite pas aux exemples décrits dans la description et que les modes de réalisation ou de fonctionnement précédemment décrits peuvent être combinés pour former de nouveaux modes de réalisation ou de fonctionnement pourvu qu'ils soient compatibles techniquement et inclus dans l'objet des revendications.

**Revendications**

1. Moteur (10) de traction pour véhicule comportant :

   - une enceinte (30),
   - un rotor (25) positionné dans l'enceinte (30) et apte à être entraîné en rotation autour d'un axe de rotation (R), et
   - au moins un canal de refroidissement (35) du rotor (25),

   **caractérisé en ce que** le moteur (10) comprend également un dispositif de détection (40) de l'obturation de l'au moins un canal de refroidissement (35), le dispositif de détection (40) comprenant :

   - un émetteur optique (45), positionné en vis-à-vis d'une première extrémité de l'au moins un canal de refroidissement (35) lorsque le rotor (25) est dans une position prédéterminée, l'émetteur optique (45) étant propre à émettre un faisceau optique (60) dans l'alignement dudit canal de refroidissement (35) lorsque le rotor (25) est dans la position prédéterminée,
   - un récepteur optique (50), positionné en vis-à-vis d'une deuxième extrémité de l'au moins un canal de refroidissement (35) lorsque le rotor (25) est dans la position prédéterminée, le récepteur optique (50) étant configuré pour recevoir le faisceau optique (60) et générer un signal électrique représentatif de l'intensité lumineuse du faisceau optique reçu, et
   - un module de traitement (55) configuré pour déterminer, en fonction du signal électrique généré par le récepteur optique (45), l'obturation de l'au moins un canal de refroidissement (35).

2. Moteur (10) selon la revendication 1, dans lequel le module de traitement (55) est configuré pour calculer, en fonction du signal électrique généré par le récepteur optique (50), un pourcentage d'obturation de l'au moins un canal de refroidissement (35).

3. Moteur (10) selon la revendication 2, dans lequel le module de traitement (55) est configuré pour calculer le pourcentage d'obturation de l'au moins un canal de refroidissement (35) en fonction de la période de rotation du rotor (25) et de la durée ($t_2$) de réception du faisceau optique (60) traversant l'au moins un canal de refroidissement (35) sur une période de ro-

**4.** Moteur (10) selon l'une quelconque des revendications précédentes, dans lequel l'au moins un canal de refroidissement (35) est parallèle à l'axe de rotation (R).

**5.** Moteur (10) selon l'une quelconque des revendications précédentes, dans lequel le rotor comprend l'au moins un canal de refroidissement (35) qui traverse le rotor (25).

**6.** Moteur (10) selon l'une quelconque des revendications précédentes, dans lequel le rotor (25) comprend une pluralité de canaux de refroidissement (35) traversant le rotor (25) et répartis à équidistance de l'axe de rotation (R), l'émetteur optique (45) étant propre à émettre successivement le faisceau optique (60) dans l'alignement de chacun des canaux de refroidissement (35) au cours du fonctionnement du moteur (10), et le module de traitement (55) étant configuré pour déterminer l'obturation de chacun des canaux de refroidissement (55) en fonction du signal électrique généré par le récepteur optique (50).

**7.** Moteur (10) selon l'une quelconque des revendications précédentes, dans lequel l'émetteur optique (45) et le récepteur optique (50) sont fixes par rapport à l'enceinte (30).

**8.** Moteur (10) selon l'une quelconque des revendications précédentes, dans lequel le module de traitement (55) est configuré pour recevoir le signal électrique issu du récepteur optique (50) à une fréquence définie par la formule suivante : $f = \frac{N*m*b}{d}$ où :

- N est la fréquence de rotation du rotor (25),
- b est la circonférence d'un cercle (C) centré sur l'axe de rotation (R) et croisant l'au moins un canal de refroidissement (35),
- d est la largeur de l'au moins un canal de refroidissement (35), et
- m est un nombre de points de mesure prédéterminé du récepteur optique (50) pour l'au moins un canal de refroidissement (35), m étant de préférence supérieur à 4.

**9.** Chaîne de traction pour véhicule comprenant un moteur (10) de traction selon l'une quelconque des revendications précédentes.

**10.** Véhicule, notamment ferroviaire, comprenant une chaîne de traction selon la revendication précédente.

**Patentansprüche**

**1.** Antriebsmotor (10) für ein Fahrzeug, umfassend:

- ein Gehäuse (30),
- einen Rotor (25), der in dem Gehäuse (30) positioniert ist und geeignet ist, um um eine Drehachse (R) in Drehung versetzt zu werden, und
- mindestens einen Kühlkanal (35) des Rotors (25),

**dadurch gekennzeichnet, dass** der Motor (10) auch eine Vorrichtung (40) zum Erfassen des Verschlusses des mindestens einen Kühlkanals (35) umfasst, die Erfassungsvorrichtung (40) umfassend:

- einen optischen Sender (45), der gegenüber einem ersten Ende des mindestens einen Kühlkanals (35) positioniert ist, wenn der Rotor (25) in einer vorbestimmten Position ist, wobei der optische Sender (45) geeignet ist, um einen optischen Strahl (60) in der Ausrichtung mit dem Kühlkanal (35) zu emittieren, wenn der Rotor (25) in der vorbestimmten Position ist,
- einen optischen Empfänger (50), der gegenüber einem zweiten Ende des mindestens einen Kühlkanals (35) positioniert ist, wenn der Rotor (25) in der vorbestimmten Position ist, wobei der optische Empfänger (50) konfiguriert ist, um den optischen Strahl (60) zu empfangen und ein elektrisches Signal zu erzeugen, das repräsentativ für die Lichtintensität des empfangenen optischen Strahls ist, und
- ein Verarbeitungsmodul (55), das konfiguriert ist, um abhängig von dem elektrischen Signal, das von dem optischen Empfänger (45) erzeugt wird, den Verschluss des mindestens einen Kühlkanals (35) zu bestimmen.

**2.** Motor (10) nach Anspruch 1, wobei das Verarbeitungsmodul (55) konfiguriert ist, um abhängig von dem elektrischen Signal, das von dem optischen Empfänger (50) erzeugt wird, einen Prozentsatz des Verschlusses des mindestens einen Kühlkanals (35) zu berechnen.

**3.** Motor (10) nach Anspruch 2, wobei das Verarbeitungsmodul (55) konfiguriert ist, um den Prozentsatz des Verschlusses des mindestens einen Kühlkanals (35) abhängig von der Drehperiode des Rotors (25) und der Dauer ($t_2$) des Empfangs des optischen Strahls (60), der den mindestens einen Kühlkanal (35) durchquert, über eine Drehperiode des Rotors (25) zu berechnen.

**4.** Motor (10) nach einem der vorherigen Ansprüche, wobei der mindestens eine Kühlkanal (35) parallel zu der Drehachse (R) ist.

5. Motor (10) nach einem der vorherigen Ansprüche, wobei der Rotor den mindestens einen Kühlkanal (35) umfasst, der durch den Rotor (25) verläuft.

6. Motor (10) nach einem der vorherigen Ansprüche, wobei der Rotor (25) eine Vielzahl von Kühlkanälen (35) umfasst, die durch den Rotor (25) verlaufen und in gleichen Abständen zu der Drehachse (R) verteilt sind, der optische Sender (45) geeignet ist, den optischen Strahl (60) während des Betriebs des Motors (10) nacheinander in die Ausrichtung jedes der Kühlkanäle (35) zu emittieren, und das Verarbeitungsmodul (55) konfiguriert ist, um den Verschluss von jedem der Kühlkanäle (55) abhängig von dem durch den optischen Empfänger (50) erzeugten elektrischen Signal zu bestimmen.

7. Motor (10) nach einem der vorherigen Ansprüche, wobei der optische Sender (45) und der optische Empfänger (50) in Bezug auf das Gehäuse (30) feststehend sind.

8. Motor (10) nach einem der vorherigen Ansprüche, wobei das Verarbeitungsmodul (55) konfiguriert ist, um das elektrische Signal von dem optischen Empfänger (50) mit einer Frequenz zu empfangen, die durch die folgende Formel definiert ist: $f = \frac{N*m*b}{d}$, wobei:

   - N die Drehfrequenz des Rotors (25) ist,
   - b der Umfang eines Kreises (C) ist, der auf der Drehachse (R) zentriert ist und den mindestens einen Kühlkanal (35) kreuzt,
   - d die Breite des mindestens einen Kühlkanals (35) ist, und
   - m eine vorbestimmte Anzahl von Messpunkten des optischen Empfängers (50) für den mindestens einen Kühlkanal (35) ist, wobei m vorzugsweise größer als 4 ist.

9. Antriebsstrang für ein Fahrzeug, umfassend einen Antriebsmotor (10) nach einem der vorherigen Ansprüche.

10. Fahrzeug, insbesondere Schienenfahrzeug, umfassend einen Antriebsstrang nach dem vorherigen Anspruch.

**Claims**

1. A traction motor (10) for a vehicle comprising:

   - an enclosure (30),

   - a rotor (25) positioned in the enclosure (30) and capable of being rotated about an axis of rotation (R), and
   - at least one cooling channel (35) of the rotor (25),

   **characterised in that** the motor (10) also comprises a device for detecting (40) the blockage of the at least one cooling channel (35), the detecting device (40) comprising:

   - an optical transmitter (45), positioned opposite a first end of the at least one cooling channel (35) when the rotor (25) is in a predetermined position, the optical transmitter (45) being adapted to emit an optical beam (60) in alignment with said cooling channel (35) when the rotor (25) is in the predetermined position,
   - an optical receiver (50), positioned opposite a second end of the at least one cooling channel (35) when the rotor (25) is in the predetermined position, the optical receiver (50) being configured to receive the optical beam (60) and generate an electrical signal representative of the light intensity of the received optical beam, and
   - a processing module (55) configured to determine, as a function of the electrical signal generated by the optical receiver (45), the blocking of the at least one cooling channel (35).

2. The motor (10) according to claim 1, wherein the processing module (55) is configured to calculate, based on the electrical signal generated by the optical receiver (50), a percentage of blockage of the at least one cooling channel (35).

3. The motor (10) according to claim 2, wherein the processing module (55) is configured to calculate the percentage of blockage of the at least one cooling channel (35) as a function of the period of rotation of the rotor (25) and the duration ($t_2$) of reception of the optical beam (60) passing through the at least one cooling channel (35) over a period of rotation of the rotor (25).

4. The motor (10) according to any one of the preceding claims, wherein the at least one cooling channel (35) is parallel to the axis of rotation (R).

5. The motor (10) according to any one of the preceding claims, wherein the rotor comprises the at least one cooling channel (35) which passes through the rotor (25).

6. The motor (10) according to any one of the preceding claims, wherein the rotor (25) comprises a plurality of cooling channels (35) passing through the rotor (25) and distributed equidistantly from the axis of rotation (R), the optical transmitter (45) being adapted to successively emit the optical beam (60) in alignment with each of the cooling channels (35) during the operation of the motor (10), and the processing module (55) being configured to determine the blockage of each of the cooling channels (55) as a function of the electrical signal generated by the optical receiver (50).

7. The motor (10) according to any of the preceding claims, wherein the optical transmitter (45) and the optical receiver (50) are fixed with respect to the enclosure (30).

8. The motor (10) according to any of the preceding claims, wherein the processing module (55) is configured to receive the electrical signal from the optical receiver (50) at a frequency defined by the following formula: $f = \frac{N*m*b}{d}$ , where:

    - N is the rotational frequency of the rotor (25),
    - b is the circumference of a circle (C) centred on the axis of rotation (R) and crossing the at least one cooling channel (35),
    - d is the width of the at least one cooling channel (35), and
    - m is a predetermined number of measurement points of the optical receiver (50) for the at least one cooling channel (35), m preferably being greater than 4.

9. A vehicle drivetrain comprising a traction motor (10) according to any of the preceding claims.

10. The vehicle, particularly a rail vehicle, comprising a drivetrain according to the preceding claim.

# FIG.1

# FIG.2

**FIG.3**

EP 3 879 675 B1

FIG.4

**FIG.5**

FIG.6

EP 3 879 675 B1

**RÉFÉRENCES CITÉES DANS LA DESCRIPTION**

**Documents brevets cités dans la description**

- JP H06105492 A

- JP H04193047 A